# EUROPÄISCHE PATENTSCHRIFT

(11) **EP 0 726 406 B1**
(45) Veröffentlichungstag und Bekanntmachung des Hinweises auf die Patenterteilung: **08.12.1999**
(21) Anmeldenummer: 96101890.0
(22) Anmeldetag: 09.02.1996
(51) Int. Cl.: F16D 65/12, B22D 19/12

(54) **Bremsscheibe**
Brake disc
Disque de frein

(30) Priorität: 13.02.1995 DE 19505112
(43) Veröffentlichungstag der Anmeldung: 14.08.1996
(73) Patentinhaber: Continental Teves AG & Co. oHG, 60488 Frankfurt (DE)
(72) Erfinder: Beer, Wilhelm, D-65428 Rüsselsheim (DE); Veith, Christoph, D-61476 Kronberg (DE); Gehrig, Horst, D-65719 Hofheim/Ts. (DE)

(56) Entgegenhaltungen:
- EP-A- 0 077 137
- EP-A- 0 403 799
- DE-A- 4 003 732
- DE-B- 1 947 672
- FR-A- 2 100 193

## Beschreibung

Die Erfindung betrifft eine Bremsscheibe gemäß dem Oberbegriff des Patentanspruchs 1.

Bei Bremsscheiben für Scheibenbremsen mit einem topfförmigen Halteteil und einem Reibring treten Probleme auf, wenn bei starker Beanspruchung der Bremse die Bremsscheibe sehr heiß wird. Aufgrund der hutförmigen Geometrie der Bremsscheibe verbiegt sich der Reibring aus der Scheibenebene heraus. Dies kann zu einem unzulässig hohen Betätigungsweg für die Scheibenbremse oder zum "Rubbeln" der Bremse führen. Zur Vermeidung dieses Problems hat es sich als zweckmäßig erwiesen, das topfförmige Halteteil und den Reibring der Bremsscheibe zweiteilig auszuführen und derart miteinander zu verbinden, daß geringfügige Relativbewegungen möglich sind. Eine "schwimmende" Lagerung des Reibrings mit einem relativ großen achsparallelen Verschiebungsweg ist hierzu nicht erforderlich.

Aus der EP 0 077 137 B1 ist eine Bremsscheibe für eine Scheibenbremse bekannt, bei der ein topfförmiges Halteteil einen Reibring trägt, der mit dem Halteteil in Drehrichtung formschlüssig verbunden ist. Das Halteteil besteht aus Aluminium und ist an den aus Eisenwerkstoff bestehenden Reibring angegossen. Nach dem Abkühlen bildet sich zwischen Halteteil und Reibring ein kleiner Luftspalt, durch den der Reibring und das Halteteil mechanisch soweit entkoppelt werden, daß eine geringfügige Relativbewegung möglich ist. Die Herstellung der bekannten Bremsscheibe erfordert allerdings ein zweistufiges Gießverfahren und die Verwendung verschiedener Werkstoffe für den Reibring und das Halteteil. Diese Umstände verteuern die Herstellung.

Aufgabe der Erfindung ist es, eine Bremsscheibe gemäß dem Oberbegriff des Patentanspruchs 1 anzugeben, die einfacher ausgestaltet und kostengünstiger herzustellen ist als bekannte Bremsscheiben.

Die Lösung der Aufgabe ergibt sich aus dem kennzeichnenden Teil des Patentanspruchs 1. Kern der erfindungsgemäßen Lösung ist die Anordnung eines Einlegeteils, welches beim Gießen das Verschmelzen von Reibring und Halteteil in einem bestimmten Bereich verhindert. Gemäß Anspruch 4 besteht das Einlegeteil aus einem Material mit einem höheren Schmelzpunkt als das Material des Reibrings und des Halteteils. Dadurch kommt es nicht zu einem Verschmelzen zwischen dem Einlegeteil und dem Reibring oder dem Halteteil. In einer einfachen Ausführungsform gemäß Anspruch 2 besteht der Reibring und das Halteteil aus dem bewährten und kostengünstigen Grauguß. Das Einlegeteil besteht vorzugsweise gemäß Anspruch 3 aus Edelstahl. Dieses Material ermöglicht die Verwendung eines sehr dünnen Einlegeteils das nicht korrodiert und mit Grauguß nicht verschmilzt.

In einer bevorzugten Ausführungsform der Erfindung nach Anspruch 5 besitzen der Reibring und das Halteteil jeweils mäanderförmige Verzahnungen, die in Drehrichtung formschlüssig ineinandergreifen und eine achsparallele Verschiebung erlauben. Dazwischen ist als Einlegeteil ein mäanderförmiges Metallband angeordnet. Ein derartiges Metallband ist mit wenig Materialaufwand kostengünstig herstellbar und läßt sich zur Fertigung der Bremsscheibe relativ einfach in der Gießform befestigen.

In einer Weiterbildung der Erfindung gemäß Anspruch 6 ist das Halteteil mit axialen Anschlägen versehen, die eine axiale Verschiebung des Reibrings begrenzen. Dadurch wird ein Herausfallen oder Abrutschen des Reibrings vom Halteteil vorteilhaft verhindert.

Ein vorteilhaftes Verfahren zur Herstellung einer erfindungsgemäßen Bremsscheibe ergibt sich aus den Merkmalen des Anspruchs 7. Eine geeignete Gießform ist derart ausgestaltet, daß ein einstückiger Bremsscheibenrohling entsteht, bei dem der Reibring und das Halteteil über einen oder mehrere Brückenabschnitte miteinander verbunden sind. Auf diese Weise läßt sich der Rohling in einem einstufigen Verfahren gießen. Zur Herstellung der Bremsscheibe wird die genannte Gießform bereitgestellt, mit einem Einlegeteil versehen und mit Gußmaterial ausgegossen, wobei das Einlegeteil in den entstehenden Bremsscheibenrohling eingegossen wird. Der Brückenabschnitt, der den Reibring und das Halteteil miteinander verbindet ist in radialer Richtung im Bereich des Einlegeteils und in axialer Richtung direkt neben dem Einlegeteil angeordnet. In einem Nachbearbeitungsgang wird der Brückenabschnitt entfernt, beispielsweise durch Abdrehen mit achsparalleler Bewegungsrichtung, so daß Reibring und Halteteil voneinander getrennt und entlang des Einlegeteils achsparallel gleitend gegeneinander verschiebbar sind. Die Trennung des Rohlings kann auch durch teilweises Abdrehen des Brückenabschnitts mit radial nach innen gerichteter Bewegung des Werkzeuges geschehen, wobei am Halteteil ein axial vorspringender Grat stehen bleibt, der als axialer Anschlag für den Reibring dient.

Ein Ausführungsbeispiel der Erfindung wird nachfolgend anhand der Zeichnungen näher erläutert.

Es zeigen:
- Figur 1: eine perspektivische Ansicht einer erfindungsgemäßen Bremsscheibe,
- Figur 2: dieselbe Bremsscheibe in einer auseinandergezogenen Darstellung zur Verdeutlichung der Einzelteile,
- Figur 3: eine geschnittene Darstellung einer Gießform mit Einlegeteil,
- Figur 4: eine geschnittene Darstellung eines Bremsscheibenrohlings,
- Figur 5: eine geschnittene Darstellung einer fertig bearbeiteten Bremsscheibe,
- Figur 6: einen vergrößerten Ausschnitt A aus Figur 5 zur Erläuterung des Nachbearbeitungsgangs bei der Fertigung der Bremsscheibe.

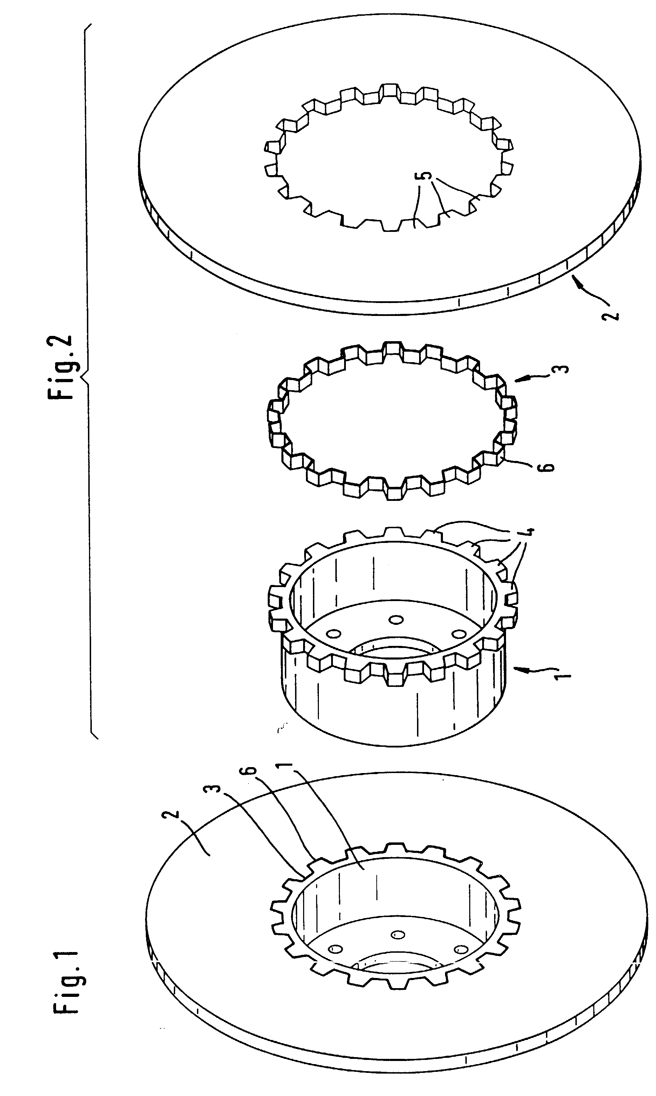

In den Figuren 1 und 2 erkennt man eine erfindungsgemäße Bremsscheibe, mit einem topfförmigen Halteteil 1, einem Reibring 2 und einem Einlegeteil 3. Der Reibring 2 und das Halteteil 1 bestehen aus Grauguß oder einem ähnlichen Eisenwerkstoff. Das Einlegeteil 3 besteht aus Edelstahl, der einen höheren Schmelzpunkt als Grauguß hat. Der Reibring 2 und das Halteteil 1 besitzen mäanderförmige Verzahnungen 4,5, die mittelbar über das als mäanderförmiges Metallband 6 ausgestaltete Einlegeteil 3 formschlüssig ineinandergreifen. Das Einlegeteil 3 wird bei der Fertigung der Bremsscheibe zwischen Halteteil 1 und Reibring 2 eingegossen.

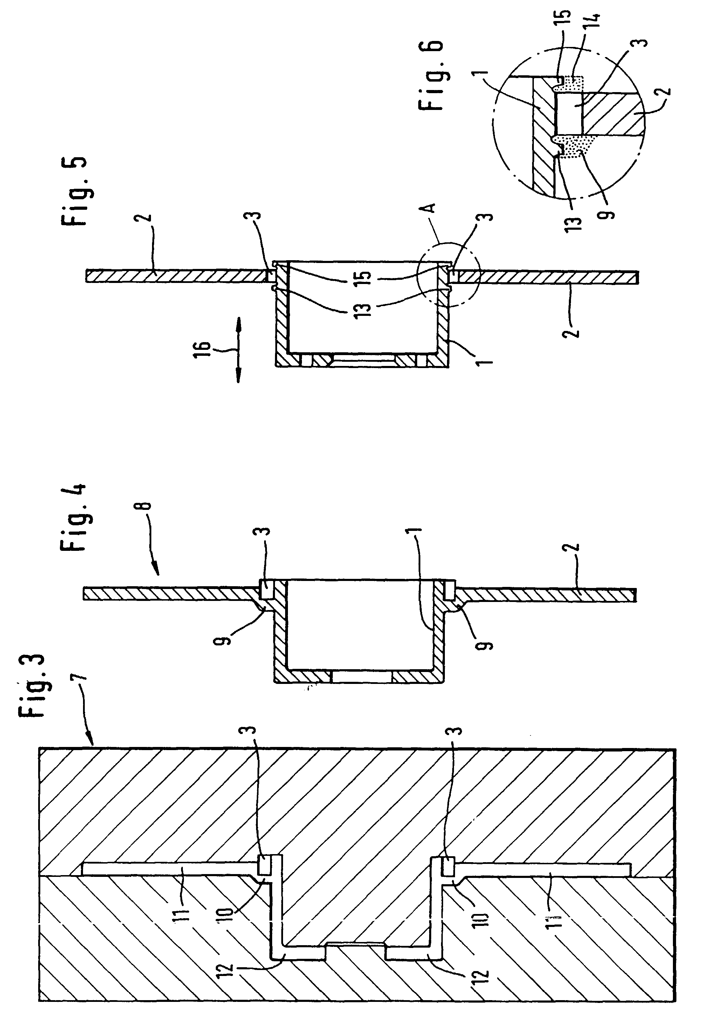

Für die in den Figuren 3 bis 6 dargestellte Fertigung wird eine zweiteilige Gießform 7 verwendet, mit der ein Bremsscheibenrohling 8 gegossen werden kann, bei dem der Reibring 2 das Halteteil 1 über einen Brückenabschnitt 9 einstückig miteinander verbunden sind. Zur Fertigung der Bremsscheibe wird die zweiteilige Gießform 7 mit dem Einlegeteil 3 versehen und geschlossen. Dann wird die Gießform 7 mit Gußmaterial ausgegossen, wobei das Einlegeteil 3 umgossen wird. Das Gießverfahren kann einstufig sein, da das Gußmaterial in der Gießform 7 über den zur Verbindung von Reibring 2 und Halteteil 1 vorgesehenen Bereich 10 für den Brückenabschnitt 9 aus dem Bereich 11 für den Reibring 2 in den Bereich 12 für das Halteteil 1 fließen kann oder umgekehrt. Der Bremsscheibenrohling 8 wird anschließend nachbearbeitet, wobei der Brückenabschnitt 9 zumindest teilweise entfernt wird. Figur 6 illustriert diesen Nachbearbeitungsgang, bei dem vom Brükkenabschnitt 9 nur noch ein umlaufender Grat 13 übrig bleibt, der vom Halteteil 1 radial nach außen ragt und einen Anschlag gegen eine axiale Verschiebung des Reibrings 2 bildet. Auf der anderen Axialseite wird ebenfalls ein mit Gußmaterial aufgefüllter Bereich 14 des Einlegeteils 3 entfernt, wobei ein zweiter Grat 15 stehen bleibt, der einen zweiten Anschlag in der entgegengesetzten Axialrichtung für den Reibring 2 bildet.

Wie man am besten in Figur 5 erkennt, läßt sich der Reibring 2 der fertigen Bremsscheibe auf dem Halteteil 1 in beiden Axialrichtungen 16 geringfügig verschieben, wobei der Verschiebeweg durch die Grate 13,15 begrenzt ist.

## Patentansprüche

1. Bremsscheibe für Scheibenbremse, mit einem topfförmigen Halteteil (1), das einen Reibring (2) trägt und an einem Fahrzeugrad befestigbar ist, wobei Reibring (2) und Halteteil (1) aus Gußmaterial bestehen und in Drehrichtung formschlüssig miteinander verbunden sind, **dadurch gekennzeichnet,** daß zwischen Reibring (2) und Halteteil (1) zumindest ein eingegossenes Einlegeteil (3) angeordnet ist, das eine direkte Berührung zwischen Reibring (2) und Halteteil (1) verhindert und eine geringfügige achsparallele Verschiebung (16) ermöglicht.

2. Bremsscheibe nach Anspruch 1, **dadurch gekennzeichnet,** daß der Reibring (2) und das Halteteil (1) aus Grauguß bestehen.

3. Bremsscheibe nach Anspruch 1 oder 2, **dadurch gekennzeichnet,** daß das Einlegeteil (3) aus Edelstahl besteht.

4. Bremsscheibe nach einem der vorhergehenden Ansprüche, **dadurch gekennzeichnet,** daß das Material des Einlegeteils (3) einen höheren Schmelzpunkt hat als das Material des Reibrings (2) und des Halteteils (1).

5. Bremsscheibe nach einem der vorhergehenden Ansprüche, **dadurch gekennzeichnet,** daß der Reibring (2) und das Halteteil (1) mit mäanderförmigen Verzahnungen (4,5) versehen sind, die unmittelbar über ein mäanderförmiges Metallband (6) als Einlegeteil (3) formschlüssig ineinandergreifen.

6. Bremsscheibe nach einem der vorhergehenden Ansprüche, **dadurch gekennzeichnet,** daß das Halteteil (1) mit axialen Anschlägen (13,15) versehen ist, die eine axiale Verschiebung (16) des Reibrings (2) begrenzen.

7. Verfahren zur Herstellung einer Bremsscheibe nach einem der vorhergehenden Ansprüche, mit folgenden Verfahrensschritten:
- In eine Gießform (7) wird zumindest ein Einlegeteil (3) aus einem hochschmelzenden Material eingelegt;
- die Gießform (7) wird mit Gußmaterial ausgegossen, wobei das Einlegeteil (3) umgossen wird; die Gießform (7) ist derart ausgestaltet, daß ein einstückiger Bremsscheibenrohling (8) entsteht, bei dem der Reibring (2) und das Halteteil (1) über zumindest einen Brückenabschnitt (9) im Bereich des Einlegeteils (3) einstückig miteinander verbunden sind;
- in einem Nachbearbeitungsgang wird der Brückenabschnitt (9) zumindest teilweise entfernt, so daß Reibring (2) und Halteteil (1) voneinander getrennt und entlang des Einlegeteils (3) achsparallel gleitend gegeneinander verschiebbar sind.

## Claims

1. Brake disc for a disc brake which includes a bowl-shaped retaining member (1) that carries a friction ring (2) and is adapted to be attached to a vehicle wheel, and the friction ring (2) and the retaining member (1) are made of a casting material and are form-lockingly interconnected in the direction of rotation,
**characterized** in that at least one cast-in insert member (3) is interposed between the friction ring (2) and the retaining member (1) and prevents a direct contact between the friction ring (2) and the retaining member (1) yet permits a slight paraxial displacement (16).

2. Brake disc as claimed in claim 1,
**characterized** in that the friction ring (2) and the retaining member (1) are made of gray cast iron.

3. Brake disc as claimed in claim 1 or claim 2,
**characterized** in that the insert member (3) is made of stainless steel.

4. Brake disc as claimed in any one of the preceding claims,
**characterized** in that the material of the insert member (3) has a higher melting point than the material of the friction ring (2) and the retaining member (1).

5. Brake disc as claimed in any one of the preceding claims,
**characterized** in that the friction ring (2) and the retaining member (1) include meander-shaped toothings (4, 5) which form-lockingly engage into each other indirectly by way of a meander-shaped metal strip (6) as an insert member (3).

6. Brake disc as claimed in any one of the preceding claims,
**characterized** in that the retaining member (1) has axial stops (13, 15) which limit an axial displacement (16) of the friction ring (2).

7. Process of manufacture of a brake disc as claimed in any one of the preceding claims in the following process steps:
- at least one insert member (3) of a high-melting material is inserted into a casting mould (7);
- the casting mould (7) is filled with casting material, and the insert member (3) is laminated; the casting mould (7) is so configured that a one-piece brake disc blank (8) is produced in which the friction ring (2) and the retaining member (1) are integrally connected in the area of the insert member (3) by way of at least one bridge portion (9);
- the bridge portion (9) is removed at least in part in a finishing operation so that the friction ring (2) and the retaining member (1) are separated from one another and are displaceable in relation to each other sliding paraxially alongside the insert member (3).

## Revendications

1. Disque de frein, pour frein à disque, comprenant une pièce de support (1) en forme de cuvette qui porte un anneau de frottement (2) et peut être fixée sur une roue de véhicule, l'anneau de frottement (2) et la pièce de support (1) étant en une matière de moulage par coulée et étant reliés l'un à l'autre par complémentarité de formes suivant la direction de rotation, caractérisé en ce qu'il est prévu, disposée entre l'anneau de frottement (2) et la pièce de support (1), au moins une pièce d'insertion (3) enveloppée par la coulée au moulage, qui empêche un contact direct entre l'anneau de frottement (2) et la pièce de support (1) et permet un léger déplacement (16) parallèle à l'axe.

2. Disque de frein suivant la revendication 1, caractérisé en ce que l'anneau de frottement (2) et la pièce de support (1) sont en fonte grise.

3. Disque de frein suivant la revendication 1 ou 2, caractérisé en ce que la pièce d'insertion (3) est en acier spécial.

4. Disque de frein suivant l'une des revendications précédentes, caractérisé en ce que la matière de la pièce d'insertion (3) possède un point de fusion plus élevé que la matière de l'anneau de frottement (2) et de la pièce de support (1).

5. Disque de frein suivant l'une des revendications précédentes, caractérisé en ce que l'anneau de frottement (2) et la pièce de support (1) sont pourvus de dentures (4, 5) ondulées qui s'emboîtent l'une dans l'autre par complémentarité de formes par l'intermédiaire d'une bande métallique (6) ondulée servant de pièce d'insertion (3).

6. Disque de frein suivant l'une des revendications précédentes, caractérisé en ce que la pièce de support (1) est pourvue de butées axiales (13, 15) qui limitent un déplacement axial (16) de l'anneau de frottement (2).

7. Procédé de fabrication d'un disque de frein suivant l'une des revendications précédentes, comportant les opérations suivantes de procédé :
- au moins une pièce d'insertion (3) en une matière à point de fusion élevé est posée dans un moule de coulée (7) ;
- le moule de coulée (7) est rempli par coulée d'une matière de moulage, de sorte que la pièce d'insertion (3) est enveloppée par la coulée au moulage ; le moule de coulée (7) est agencé de façon telle qu'il se forme une ébauche de disque de frein (8) d'un seul tenant dans laquelle l'anneau de frottement (2) et la pièce de support (1) sont reliés l'un à l'autre d'un seul tenant dans la zone de la pièce d'insertion (3) par l'intermédiaire d'au moins une section formant pont (9) ;
- dans une opération d'usinage après-coup, la section formant pont (9) est ôtée au moins partiellement, de sorte que l'anneau de frottement (2) et la pièce de support (1) sont séparés l'un de l'autre et peuvent être déplacés l'un par rapport à l'autre en glissant parallèlement à l'axe le long de la pièce d'insertion (3).
